# EUROPÄISCHE PATENTSCHRIFT

(11) **EP 1 780 006 B1**
(45) Veröffentlichungstag und Bekanntmachung des Hinweises auf die Patenterteilung: **15.12.2010**
(21) Anmeldenummer: 06022003.5
(22) Anmeldetag: 20.10.2006
(51) Int. Cl.: B32B 7/12, B32B 9/04, B32B 18/00, B32B 3/14

(54) **Verbundkörper basierend auf Natur- und/oder Kunststein und Keramik**
Composite body based on a ceramic and an artificial or natural stone
Corps composite basé sur céramique et une pierre artificielle ou naturelle

(30) Priorität: 26.10.2005 DE 102005051557
(43) Veröffentlichungstag der Anmeldung: 02.05.2007
(73) Patentinhaber: Planolith GmbH, 63741 Aschaffenburg (DE)
(72) Erfinder: Hein, Stefan, 63741 Aschaffenburg (DE)
(74) Vertreter: Köllner, Malte

(56) Entgegenhaltungen:
- EP-A- 0 328 030
- WO-A-2007/107686
- DE-A1- 1 594 276
- DE-A1- 3 726 373
- DATABASE WPI Week 199317 Derwent Publications Ltd., London, GB; AN 1993-140808 XP002482103 & JP 05 079185 A (TORAY THIOKOL CO) 30. März 1993 (1993-03-30)

## Beschreibung

### Gebiet der Erfindung

Die vorliegende Erfindung betrifft einen als Basis für Messmaschinen, Bearbeitungsmaschine, Messplatten und/oder mechanische Messmittel ausgebildeten Verbundkörper, bestehend aus mindestens einem ersten Körper aus Natur- und/oder Kunststein und mindestens einem zweiten Körper aus Keramik, wobei die Keramik mittels eines zweikomponenten-Klebstoffes an den Natur- und/oder Kunststein verklebt ist. Weiterhin betrifft die Erfindung die Verwendung eines derart gestalteten Verbundkörpers als Basis für Messmaschinen, Bearbeitungsmaschinen, Messplatten und/oder mechanische Messmittel; auch betrifft die Erfindung Vorrichtungen, die einen solchen Verbundkörper aufweisen.

### Stand der Technik

Ausgewählte Mineralien und ein geringer Anteil Bindemittel auf Epoxidharzbasis bilden die Grundlage für einen Konstruktionswerkstoff mit überzeugenden Eigenschaften, der auch unter der Bezeichnung Kunststein bekannt ist.

Als Natursteine bezeichnet man Steine, die in der Natur vorkommen, sogenannte gewachsene Steine, im Gegensatz zum Kunststein, Betonwerkstein etc. Diese können Steine aus dem Steinbruch sein oder Steine, die in der Landschaft als Kieselstein, Brocken, Findling oder ähnliches anliegen. Im allgemeinen werden Natursteine in Steinbrüchen abgebaut und ohne Aufbereitung oder Brennprozesse (außer vielleicht geschnitten und geschlagen) verarbeitet.

Natursteine werden sowohl in der Industrie (Zementherstellung, Schotter, Granulat etc.), in der Architektur (Fassadenverkleidungen, Treppen, Wegebelag, Baustein im allgemeinen, Restaurierungen), der Denkmal-Herstellung (Denkmäler, Grabmale), dem Maschinenbau (Unterbauten, Fundamente) als auch in der Bildhauerei (Denkmäler, Skulpturen, Installationen) verwendet.

Die heutzutage vorwiegend verwendeten Natursteine kommen meist aus Indien, China, Südafrika, Brasilien, Italien, Türkei und Skandinavien. Unebenheiten, Unterschiede und Einschlüsse machen jeden Naturstein aus. Wie beschrieben, wird der Naturstein im Innenbereich und Außenbereich verarbeitet, als Bodenbelag oder Außenfassade. Mit Naturstein lassen sich z. B. Bäder und Treppen verkleiden. Granit und Basalt sind sehr harte Natursteine. Sie werden häufig im Außenbereich verbaut, wo eine hohe Beanspruchung besteht. Natur-Kalksandsteine und Marmor sind etwas "weicher" und werden meistens im Innenbereich verbaut oder dienen der Erstellung von Skulpturen.

Bei Reinigungsmitteln für Natursteine muss darauf geachtet werden, dass kalkhaltige Natursteine eine andere Pflege und Reinigung erfordern als die anderen Natursteine, da sie säureempfindlich sind.

Granite (von lat. *granum -* das Korn) sind massige, grobkristalline Tiefengesteine, die aus etwa gleichen Teilen Quarz, Alkalifeldspat und Plagioklas bestehen. Daneben enthalten sie etwa 20% - 40% mafische Mineralien (Biotit, Muskovit, seltener Amphibole). Als Akzessorien führen sie Zirkon, Apatit, Titanit, auch Magnitit, Rutil und Ilmenit. Granite gehören zu den häufigsten Gesteinen innerhalb der kontinentalen Erdkruste. Sie entstehen primär an Subduktionszonen: die abtauchende (ozeanische) Platte erwärmt sich, der hohe Wassergehalt lässt Sedimente aufschmelzen, dabei entsteht saures, granitisches Magma. Bei orogenen (gebirgsbildenden) Prozessen entsteht ebenfalls Granit.

Granite sind meist schwach radioaktiv, da sie Spuren von Uran, Rubidium und anderen radioaktiven Elementen enthalten. Ein weiterer Träger der Radioaktivität ist das in den Feldspäten und Glimmern enthaltene Kalium. Im allgemeinen ist Granit mittelbis grobkörnig. Frischer Granit ist hart und widerstandsfähig, außerdem hat er eine schwach angedeutete Klüftigkeit. Durch die sogenannte Wollsack-Verwitterung bilden sich, von den Klüften ausgehend, matratzenförmige Gesteinsblöcke.

Granite haben wegen ihrer hohen Widerstandskraft, Härte und Wetterfestigkeit und wegen ihrer guten Schleifbarkeit und Polierbarkeit eine wirtschaftliche Bedeutung im Bauwesen. Sie finden sich: im Straßenbau als Pflasterstein, Bordstein oder Schotter; im Bahnbau als Schotter; im Hochbau als Außenwandverkleidung, Bodenbelag; im Innenausbau als Wandverkleidung, Treppenbelag, Innenverkleidung, Tischplatte; im Gartenbau als Pflasterstein, Rabattenstein, Brunnen.

Weitere Vorteile von Granit, beispielsweise gegenüber Gusseisen, sind die absolute Verzugsfreiheit, die Temperaturunempfindlichkeit aufgrund der geringen Wärmeleit- und Ausdehnungszahlen, die Härte und Verschleißfestigkeit (Granit ist härter als gehärteter Stahl), der mangelnde Magnetismus und die mangelnde elektrische Leitfähigkeit sowie die absolute Rostsicherheit und, sofern nicht kalkhaltige Natursteine verwendet werden, auch die Säurebeständigkeit. Es ist kein Ent- oder Einfetten nötig, sodass Granit praktisch wartungsfrei ist. Aufgrund des großen Tragflächenanteils der Oberfläche durch eine evtl. mikrofeine Bearbeitung sowie des Kostenvorteil (Granit ist z.B. billiger als Gusseisen), sind weitere Vorteile gegeben. Aufwändige Modelle sowie natürliche und künstliche Alterung entfallen.

Wissenschaft und Technik stehen in einem kontinuierlichen Entwicklungsprozess. Dabei führt der Weg zu immer anspruchsvolleren, intelligenteren Technologien.

Mit derselben Dynamik steigen auch die Ansprüche, die an moderne Werkstoffe gestellt werden. Gefordert werden unter anderem höhere Festigkeiten für Material sparende Konstruktionen, leichtere Bauteile zur Energieeinsparung, höhere Qualität für mehr Sicherheit sowie längere Lebensdauer. Schließlich spielt die Wirtschaftlichkeit eine ganz entscheidende Rolle. Keramische Werkstoffe haben zu diesem Innovationsprozess bisher einen wichtigen Beitrag geleistet.

Die Bezeichnung Keramik stammt aus dem Altgriechischen. *"Keramos"* war die Bezeichnung für Ton und die aus ihm durch Brennen hergestellten formbeständigen Erzeugnisse. Die Produktion von Keramik gehört zu den ältesten Kulturtechniken der Menschheit. Ihre älteste Nutzung scheint bei semi-seßhaften Jägerkulturen im Gebiet des oberen Nil erfolgt zu sein. Ihre enorme Verbreitung verdankt sie aber ursprünglich den erweiterten Möglichkeiten zur Aufbewahrung (Vorratshaltung) von Nahrung wie sie mit dem Neolithikum erforderlich wurde. Keramik spielt eine wesentliche Rolle im Rahmen der Determination neolithischer Kulturen. Das Ausgangsmaterial Ton bot jedoch schon sehr früh auch Anreize zu künstlerischer Gestaltung.

Heute ist der Begriff breiter gefasst. Keramiken sind weitgehend aus anorganischen, feinkörnigen Rohstoffen unter Wasserzugabe bei Raumtemperatur geformte und danach getrocknete Gegenstände, die in einem anschließenden Brennprozess oberhalb 900°C zu harten, dauerhafteren Gegenständen werden. Der Begriff schließt auch Werkstoffe auf der Grundlage von Metalloxiden ein. Keramik wird heute im zunehmenden Maße für hochtechnische Einsatzzwecke, z.B. bei der Sinterung, genutzt. Eine strenge Systematik der Keramik - wie beispielsweise bei Metall-Legierungen - ist kaum möglich, weil es hinsichtlich der Rohstoff-Zusammensetzung, des Brennvorgangs und des Gestaltungsprozesses fließende Übergänge gibt. Keramische Produkte werden deshalb häufig nach den jeweils im Vordergrund der Betrachtung stehenden Aspekten unterschieden:
- Beschaffenheit des Materials: Grob- und Feinkeramik
- Verwendungszweck: z.B. Baukeramik, Sanitärkeramik, Tischgeschirr, Zierkeramik, technische Keramik
- Besondere Eigenschaften: z.B. feuerfeste Keramik (ehedem für Küchengeräte von Bedeutung), Hochtemperaturkeramik (Verbrennungsmotoren), Wasseraufnahmevermögen, Porosität
- Regionale Keramiktypen: z. B. Westerwälder Keramik, Bunzlauer Keramik; ursprünglich auch Majolika und Fayence

Bedeutsam ist die Unterteilung in Grob- und Feinkeramik. Zur ersteren gehört die große Gruppe der Baukeramik (z.B.: Bau- und Dachziegel, Kanalisationsrohre); die Produkte sind dickwandig, häufig inhomogen, von oft zufälliger Färbung. Feinkeramik ist dagegen feinkörnig (unter 0,05 mm), von definierter Färbung (z.B. weiß für Haushaltskeramik, Tischgeschirr und Sanitärkeramik); hierher gehören auch die künstlerischen Erzeugnisse. Feinkeramik erfordert bezüglich Aufbereitung der Rohmasse, der Formgebung und des Trocknens sowie Brennens eine erheblich größere Sorgfalt als bei Herstellung von Grobkeramik nötig ist. Die Eigenschaften keramischer Produkte werden bestimmt durch Art und Menge der in ihnen enthaltenen Kristalle und die als Bindung funktionierende Verglasungen. Keramiken sind formbeständig, geschmacks- und geruchlos.

Die Auswahl und Mischung der Rohstoffe muss folgenden Forderungen genügen: Gute Formbarkeit der Masse, geringer Schwund beim Trocknen und Brennen, hohe Standfestigkeit beim Brennen, geringe oder keine Verfärbung des Endproduktes

In der industriellen Keramikproduktion werden die Komponenten, nachdem sie teilweise vorgebrannt wurden, entsprechend der Rezeptur gemeinsam in Trommelmühlen fein gemahlen. Nach dem Schlämmen unter Zugabe von Wasser wird dieses in Filterpressen wieder weitgehend entfernt. Der zurückbleibende Filterkuchen wird getrocknet und nochmals gemahlen. In dieser Form wird die Rohmasse entweder gelagert oder sofort unter Zugabe von Wasser und verflüssigenden Hilfsstoffen in Maschinen geknetet und ggf. entlüftet. Daneben hat in jüngerer Zeit die halbnasse und die trockene Aufbereitung bei der industriellen Herstellung Bedeutung gewonnen. In der Töpferwerkstatt wird z.T. noch heute dieser Prozess in aufwändiger Handarbeit durchgeführt. Da Mahlwerke oft nicht zur Verfügung stehen, kommt dem Schlämmen große Bedeutung zu. Die Homogenisierung der Masse wurde in mühsamer Knetarbeit erreicht, heute stehen dafür meist Maschinen zur Verfügung. Ziel ist es, eine möglichst homogene, geschmeidige und blasenfreie Arbeitsmasse zu erzeugen.

Die Formgebung erfolgt bei Grobkeramik u.a. durch Strangpressen (z.B. Rohre) oder durch Formpressen. Feinkeramik wird (analog der historischen Entwicklung) durch folgende Verfahren geformt:
- Modellieren
- Aufbauarbeit aus einzelnen Strängen (z.B. bei Hohlgefäßen)
- Drehen rotationssymmetrischer Hohlgefäße auf der Töpferscheibe
- Gießen dünnflüssiger Mischungen in geteilte Gipshohlformen, die das Wasser aufsaugen
- Formgebung auf motorgetriebenen Scheiben in Hohlformen mit Hilfe von Schablonen (sog. Eindrehen und Überdrehen)
- Pressen und Stanzen oder Fräsen
- Spritzguss
- Foliengießen

Industriell hat die halbtrockene und die trockene Formgebung Bedeutung erlangt, weil die Trocknungszeiten sehr verkürzt werden und eine hohe Maßhaltigkeit der Produkte erreicht wird.

Nach der Formgebung ist der Rohling feucht durch das mechanisch eingeschlossene Wasser in den Hohlräumen oder durch das physikochemisch gebundene Wasser (Adhäsion, Kapillarwasser) bzw. dem chemisch gebundenen Wasser (Kristallwasser).

Die Trocknungsgeschwindigkeit hängt außer von dem umgebenden Klima stark von der Rezeptur der Rohmasse ab. Um die Trocknungsgeschwindigkeit zur Vermeidung von Rissen niedrig zu halten, können die Rohlinge abgedeckt werden. Industriell erfolgt das Trocknen in klimatisierten Räumen. Das Wasser wird allerdings erst durch den Brand vertrieben.

Der Brennprozess (Rauh- oder Schrühbrand) - Sintern genannt - ist sehr problematisch und erfordert eine sorgfältige Steuerung. Im so entstehenden "Scherben" werden die Kristalle miteinander verfilzt und durch glasige Anteile verkittet. Anteil und Art der Kristall- und Glasphase sowie der Poren bestimmen die Eigenschaften des gebrannten Gutes. Die angewandten Temperaturen (bis etwa 1350 °C; teilweise erheblich höher) hängen von der Rohmischung, also von dem zu erzeugenden Produkt ab und müssen in vielen Fällen während des Brennprozesses variiert werden (Temperaturprofil). Überdies ist es häufig wichtig, dass der Prozess zeitweilig unter reduzierender Atmosphäre verläuft (z.B. Vermeiden von Gelbfärbung durch Eisenverunreinigungen bei weißem Geschirr oder bei Sanitärkeramik). Eingesetzt werden Kammer-, Tunnel-, Ringöfen. Für den Handwerksbetrieb kommen elektrische Öfen oder mit fossilen Brennstoffen befeuerte Öfen in Frage. Hier ist zu unterscheiden zwischen offenen Systemen, bei denen die Brenngase (mit unterschiedlicher Flammführung) in unmittelbaren Kontakt mit der Ware treten und Muffelöfen, bei denen die Brenngase das Brenngut indirekt erhitzen.

Um die Eigenschaften von Keramik sinnvoll und effektiv nutzen zu können, reicht es nicht, ein vorhandenes Bauelement aus herkömmlichem Werkstoff detailgetreu in Keramik umzusetzen. Die Zeichnung des bislang genutzten Bauteils kann aber mit etlichen zusätzlichen Informationen den Weg zum keramischen Serienbauteil zeigen.

Dabei müssen die thermischen, elektrischen, mechanischen und chemischen Belastungen berücksichtigt werden. Aufgrund der jeweiligen Schlüsselbelastungen lassen sich ein oder mehrere Werkstoffe aus der Menge der Keramiken herausfiltern.

Der neue keramische Werkstoff muss den Analysen der technischen Problemstellung genügen, darüber hinaus ein angemessenes Preis-Leistungs-Verhältnis über seine gesamte Lebenszeit und ggf. einen Zusatznutzen bieten.

Keramik hat sich bis heute in einer Vielzahl von Anwendungen bewährt bzw. wird für neue in Betracht gezogen, bei denen hohe Härte, große Verschleißbeständigkeit, hohe Korrosionsbeständigkeit und gute Hochtemperaturstabilität - verbunden mit niedrigem spezifischen Gewicht - benötigt werden. Die neuen HighTech-Werkstoffe erreichen hohe Festigkeiten. Ihre Werte sind vergleichbar mit den Werten von Metallen und übertreffen in der Regel alle Polymere.

Die Eigenschaften der keramischen Werkstoffe werden maßgeblich durch das jeweilige Gefüge - beziehungsweise die Mikrostruktur - bestimmt. Durch die gezielte Einstellung von bestimmten Mikrostrukturen, das so genannte Gefügedesign, können die mechanischen und physikalischen Kennwerte in unterschiedliche Richtungen hin beeinflusst werden.

Ein wesentlicher Gesichtspunkt ist bei der Anwendung von Keramik immer zu berücksichtigen: "Keramik ist spröde"! Metallische Konstruktionswerkstoffe sind auf Grund ihrer Duktilität "ausgewogene und gutmütige" Werkstoffe, die auch einmal leichtere konstruktive Fehler verzeihen (Fehlertoleranz), da sie in der Lage sind, lokale Spannungsspitzen durch elastische und plastische Verformung abzubauen.

Darüber hinaus zeichnen sich die Metalle in der Regel durch eine gute elektrische und thermische Leitfähigkeit sowie durch Kennwerte aus, die unabhängig von der Raumrichtung sind. Keramische Werkstoffe hingegen sind in der Regel elektrisch und thermisch isolierend, haben eine hohe Härte und können eine sehr niedrige Wärmedehnung besitzen. Durch das Fehlen der plastischen Verformbarkeit sind sie außerdem außerordentlich formstabil. Es werden Druckfestigkeiten erreicht, die das zehnfache der Biege- und Zugfestigkeit betragen können. Gegenüber Metallen ist die Keramik besonders für den Einsatz bei hohen Temperaturen geeignet, da die Kennwerte der keramischen Werkstoffe durch Temperaturbelastungen weitaus weniger und erst bei höheren Gradzahlen beeinflusst werden als die der Metalle. Ähnlich positiv verhält sich Keramik in Bezug auf Korrosion und Verschleiß.

Wegen dieser Vorteile begegnet uns Technische Keramik auf Schritt und Tritt. Ohne keramische Isolierteile würden viele Haushaltsgeräte nicht funktionieren. Ebenso wäre ohne Isolatoren und Sicherungsbauteile aus Technischer Keramik eine zuverlässige Stromversorgung nicht denkbar. Keramische Substrate und Bauteile bilden die Grundlage für Komponenten und Baugruppen in allen Bereichen der Elektronik, und im Maschinen- und Anlagenbau sorgen Gleit- und Regelelemente für verschleiß- und korrosionsfreie Funktion. Bei Industrieöfen in der Hochtemperaturtechnik ist Keramik als Konstruktions- und Isolationswerkstoff unverzichtbar.

Wie schon beschrieben, ist Keramik ein Werkstoffbegriff, der wegen der Vielfältigkeit der einbezogenen Rohstoffe und Anwendungen mit historisch gewachsenen Begriffen arbeitet.

Als Minimaldefinition kann gelten: Keramische Werkstoffe sind anorganisch und nichtmetallisch. In der Regel werden sie bei Raumtemperatur aus einer Rohmasse geformt und erhalten ihre typischen Werkstoffeigenschaften durch einen Sintervorgang bei hohen Temperaturen. Dagegen umfasst der Begriff "ceramics" im angelsächsischen Sprachgebrauch zusätzlich u. a. auch Glas, E-maile, Glaskeramik und anorganische Bindemittel (Zement, Kalk, Gips).

Die Keramische Industrie in Deutschland unterteilt je nach Kornaufbau des Masseversatzes in Grob- und Feinkeramik. Die Definition nach Hausner führt über das Gefüge des Scherbens, also ebenfalls über den Kornaufbau. Die Grenze liegt bei Korngrößen von etwa 0,1 bis 0,2 mm. Sind die Gefügebestandteile kleiner als 0,1 mm, also mit dem bloßen Auge nicht mehr erkennbar, spricht man im deutschen Sprachgebrauch - unabhängig vom Werkstoff - von Feinkeramik.

Zur Feinkeramik gehören Technische Keramik, Geschirrkeramik, Zierkeramik, Sanitärkeramik, Wand- und Bodenfliesen sowie Schleifmittel auf keramischer Basis.

Grobkeramik beinhaltet z. B. Ziegel- oder konventionelle Feuerfestwerkstoffe.

Technische Keramik umfasst keramische Produkte für technische Anwendungen.

In der Literatur auftretende Begriffe wie Hochleistungskeramik, Strukturkeramik, Konstruktionskeramik, Industriekeramik, Ingenieurkeramik, Funktionskeramik, Elektrokeramik, Schneidkeramik und Biokeramik beschreiben spezielle Aspekte der Technischen Keramik. Eine Einteilung nach diesen Begriffen ist nicht sinnvoll, da sie sich z. T. stark überschneiden.

Hochleistungskeramik ist in DIN V ENV 12212 definiert als "hoch entwickelter, hoch leistungsfähiger keramischer Werkstoff, der überwiegend nichtmetallisch und anorganisch ist und über bestimmte zweckmäßige Eigenschaften verfügt."

Der Begriff Hochleistungskeramik wird vor allem in Abgrenzung zu traditioneller Keramik auf Tonbasis einschließlich Geschirrporzellan, Sanitärkeramik, Wand- und Bodenfliesen sowie Baukeramik verwendet. Diese Definition deckt sich mit der Formulierung der "Japan Fine Ceramics Association".

Struktur- oder auch Konstruktionskeramik sind nicht genormte Begriffe, unter denen man Werkstoffe versteht, die in irgendeiner Form mechanischen Belastungen standhalten müssen, z.B. Biege- und Druckspannungen. Praktisch identische Bedeutung haben die Begriffe Industrie- und Ingenieurkeramik.

Funktionskeramik ist Hochleistungskeramik, bei der die innewohnenden Eigenschaften des Werkstoffs für eine aktive Funktion verwendet werden, z. B. bei keramischen Bauelementen, die elektrische, magnetische, dielektrische oder optische Kennwerte aufweisen.

Elektrokeramik ist Hochleistungskeramik, die aufgrund ihrer spezifischen Eigenschaften in Elektrotechnik und Elektronik eingesetzt wird. Die allgemeine Elektrotechnik nutzt vor allem die Isolierfähigkeit und die mechanische Festigkeit, die Elektronik darüber hinaus auch Eigenschaften wie ferroelektrisches Verhalten, Halbleitung, nicht linearen Widerstand, Ionenleitung und Supraleitung.

Schneidkeramik ist Hochleistungskeramik, die aufgrund hervorragender Verschleiß- und Hitzebeständigkeit als Werkzeug zur spannenden Bearbeitung (Drehen, Bohren, Fräsen) geeignet ist.

Biokeramik ist Hochleistungskeramik für den Einsatz im medizinischen Bereich d. h. im menschlichen Körper und beinhaltet z. B. Erzeugnisse, die Knochen, Zähne oder hartes Gewebe reparieren oder ersetzen. Weitere Definitionen sind in DIN EN 12 212 enthalten.

Technische Keramik wird oft mit den vorgenannten Begriffen in Gruppen eingeteilt. Da jedoch damit keine eindeutige Klassifizierung möglich ist, werden die Werkstoffe alternativ entsprechend ihrer mineralogischen bzw. chemischen Zusammensetzung gegliedert.

Zu den Werkstoffen der Technischen Keramik gehören die folgenden Gruppen: Silikatkeramik, Oxidkeramik, Nichtoxidkeramik.

Silikatkeramik als älteste Gruppe aller Keramiken hat einen dominierenden Anteil an den feinkeramischen Erzeugnissen. Wesentliche Bestandteile dieser mehrphasigen Werkstoffe sind Ton und Kaolin, Feldspat und Speckstein als Silikatträger. Daneben werden auch Komponenten wie Tonerde und Zirkon zur Erzielung spezieller Werkstoffeigenschaften, z. B. hoher Festigkeiten, verwendet. Im Sinterbrand entsteht neben den kristallinen Phasen meist ein hoher Anteil (> 20 %) an Glasphase, deren wesentlicher Bestandteil Siliciumoxid (SiO₂) ist.

Zu den Werkstoffen der Silikatkeramik zählen: Porzellan, Steatit, Cordierit und Mullit.

Wegen relativ niedriger Sintertemperaturen, guter Prozessbeherrschung und hoher Verfügbarkeit der natürlichen Rohstoffe ist die Silikatkeramik wesentlich kostengünstiger als Oxid- oder Nichtoxidkeramik. Letztere benötigen aufwändig hergestellte synthetische Pulver und hohe Sintertemperaturen.

Silikatkeramik kommt z. B. in der Wärmetechnik, der Mess- und Regeltechnik, der Verfahrens- und Umwelttechnik, der Hoch- und Niederspannungstechnik mit typischen Anwendungen, wie Isolatoren, Sicherungspatronen, Katalysatoren, Gehäusen sowie bei vielfältigen Anwendungen in der Elektroinstallationstechnik zum Einsatz. Silikatkeramik findet sich weiterhin im Feuerfestbereich wieder.

Unter Oxidkeramik werden alle Werkstoffe verstanden, die im Wesentlichen aus einphasigen und einkomponentigen Metalloxiden (> 90 %) bestehen. Die Materialien sind glasphasearm oder glasphasefrei. Die Rohstoffe werden synthetisch hergestellt und besitzen einen hohen Reinheitsgrad. Bei sehr hohen Sintertemperaturen entstehen gleichmäßige Mikrogefüge, die für die verbesserten Eigenschaften verantwortlich sind.

Einige technisch bedeutende Vertreter der Oxidkeramik als Beispiele für ein Einstoffsystem sind: Aluminiumoxid, Magnesiumoxid, Zirkoniumoxid bzw. Zirkoniumdioxid, Titanoxid bzw. Titandioxid (Kondensatorwerkstoff), und für ein Mehrstoffsystem sind: als Mischoxidkeramik Aluminiumtitanat, Bariumtitanat, Bleizirkonattitanat (Piezokeramik), als Dispersionskeramik mit Zirkoniumoxid verstärktes Aluminiumoxid (ZTA - Al₂O₃/ZrO₂).

Die Oxidkeramik kommt in Elektrotechnik und Elektronik und vielfach als Strukturwerkstoff, also für nichtelektrische Anwendungen zum Einsatz. Sie bietet die dafür geeigneten typischen Eigenschaften wie Bruchzähigkeit, Verschleiß- und Hochtemperaturfestigkeit sowie Korrosionsbeständigkeit.

Oxidkeramiken haben große Bedeutung als Schneidstoffe in der zerspannenden Fertigung. Die Schneidkeramik unterscheidet sich in oxidische und nichtoxidische Keramiken. Bei den Oxidkeramiken dominieren gegenüber, den Nichtoxidkeramiken vor allem Ionenbindungen. Mit ca. 85% ist das Aluminiumoxid (Al₂O₃) der wichtigste Vertreter der Oxidkeramiken.

Die Oxidkeramiken sind härter, verschleißfester und wärmebeständiger, allerdings auch spröder als Hartmetalle und daher in der Zerspannungsmechanik für Fertigungen mit unterbrochenem Schnitt, wie er beim Fräsen gezwungenermaßen auftritt, nur bedingt geeignet. Die Vorteile der Schneidkeramik liegen in der hohen Härte und der Warmfestigkeit sowie der hohen chemischen und thermischen Beständigkeit. Hoch korrosionsbeständig auch bei hohen Temperaturen (Einsatzbereich bis > 1000°C). Nachteilig wirken sich die geringe Zähigkeit und die geringe Toleranz gegenüber raschen Temperaturwechseln aus. (Oxidkeramik "springt" bei schlagartiger Abkühlung, z.B. durch Kühlschmiermittel) Je nach verwendetem Oxid und Herstellungsverfahren haben Oxidkeramiken thermische Eigenschaften vom guten Isolator bis zum guten Wärmeleiter:

Werkzeuge aus Schneidkeramik gibt es als Wendeschneidplatten. Sie haben eine größere Dicke als Schneidplatten aus Hartmetall und sind meist stark angepasst, um die Bruchgefahr zu minimieren und auch bei höheren Bearbeitungsgeschwindigkeiten einen Spanbruch zu ermöglichen.

Deshalb ist das Haupteinsatzfeld dieser Schneidstoffe die zerspannende Bearbeitung von gehärtetem Stahl sowie Gusseisen ohne Kühlung. Einsatzgebiet in der spanabhebenden Fertigung ist die Fein- und Schlichtbearbeitung. Schwingungs-, Schlag- und Temperaturwechselempfindlichkeit müssen beachtet werden.

Das Aluminiumoxid mit einem Al₂O₃ -Gehalt von mehr als 80% bis mehr als 99% ist der technisch wichtigste oxidkeramische Werkstoff. Er zeichnet sich aus durch: Hohe Festigkeit und Härte, hohe Verschleißfestigkeit und Korrosionsbeständigkeit, hohe Wärmeleitfähigkeit, hervorragendes Isolationsvermögen, hohe Zähigkeit und Hochtemperaturfestigkeit.

Wegen seiner vielseitigen Eigenschaften und Eigenschaftskombinationen und seines guten Preis-Leistungs-Verhältnisses wird der Werkstoff praktisch in allen Anwendungsgebieten eingesetzt wie z.B. in der Elektrotechnik, in der Elektronik, im Maschinen- und Anlagenbau, in der Chemie- und Verfahrenstechnik, in der Medizintechnik sowie in der Hochtemperaturtechnik.

Magnesiumoxid (MgO) wird meist in hoher Reinheit als sog. Einstoffkeramik in poröser oder gasdichter Form hergestellt. Besondere Kennzeichen sind die gute elektrische Isolierfähigkeit und die Wärmeleitfähigkeit. Magnesiumoxid kommt in der Wärmetechnik, vorwiegend bei der Herstellung von Röhrchen mit genau definierter Festigkeit, sowie als Isolierwerkstoff für z.B. Gehäuse zum Einsatz.

Zirkkonoxid (ZrO2) Zirkonoxid tritt in monokliner, tetragonaler und kubischer Kristallmodifikation auf und wird als voll stabilisiertes (FSZ), teilstabilisiertes (TSZ) oder tetragonales (TZP) Zirkonoxid entsprechend der Menge der Dotierung hergestellt. Zirkonoxide haben wegen ihrer hervorragenden tribologischen Eigenschaften sowie ihrer höchsten Biegebruch- und Zugfestigkeit, der hohen Bruchzähigkeit, der hohen Verschleißfestigkeit und Korrosionsbeständigkeit , der niedrigen Wärmeleitfähigkeit , der Sauerstoffionenleitfähigkeit und ihrem E-Modul ähnlich Stahl in den letzten Jahren zunehmend Bedeutung erlangt. Aufgrund dieser Eigenschaften werden Zirkonoxid-Keramiken bevorzugt für mechanisch hochbelastbare Komponenten eingesetzt. Die Sauerstoffionenleitfähigkeit wird zur Messung von Sauerstoffpartialdrücken, z. B. in der Lambda-Sonde des Katalysators genutzt.

Aluminiumtitanat (ATi) ist eine stöchiometrische Mischphase von Aluminiumoxid und Titandioxid. Der Werkstoff überzeugt durch seine niedrige Wärmeleitfähigkeit, des sehr niedrigen Wärmeausdehnungkoeffizienten, verbunden mit einer sehr hoher Temperaturwechselbeständigkeit, der geringen Benetzbarkeit durch Aluminium- und Buntmetallschmelzen und der offenen Porosität. Anwendung findet das Aluminiumtitanat beispielsweise als Portliner oder Zylinderauskleidung in Fahrzeugmotoren sowie als Ofenschieber und in der Gießereitechnik.

Die wichtigsten piezoelektrischen keramischen Werkstoffe (PZT) heute basieren auf dem oxidischen Mischkristallsystem Bleizirkonat und Bleititanat. Die Eigenschaften hängen vom molaren Verhältnis (Bleizirkonat zu Bleititanat) sowie Substitutionen und Dotierungen durch zusätzliche Elemente ab. Piezokeramiken sind durch den direkten piezoelektrischen Effekt in der Lage, bei mechanischer Verformung oder Belastung elektrische Ladung freizusetzen. Beim inversen piezoelektrischen Effekt kommt es zu einer Dimensionsänderung durch ein elektrisches Feld. Es ergeben sich dadurch vielfältige Modifikationsmöglichkeiten für Werkstoffe mit unterschiedlichster Spezifikation, beispielsweise für Sensoren, Hochleistungs- Ultraschallgeneratoren und Aktoren.

Die Werkstoffe der Technischen Keramik verfügen über Eigenschaften und Eigenschaftskombinationen, die in vielen Beziehungen von anderen Werkstoffen nicht erreicht werden. Einen Überblick gibt die nachfolgende Tabelle:

**Tab. 1: Eigenschaften der technischen Keramik**

| elektrisch | mechanisch | thermisch | chem./biologisch |
|---|---|---|---|
| Isolierfähigkeit / elektrische Leitfähigkeit | Verschleißfestigkeit | Hochtemperaturfestigkeit | Korrosionsbeständigkeit |
| Durchschlagsfestigkeit | Festigkeit | Temperatur-Wechselbeständigkeit | Katalytische Eigenschaften |
| Dielektrische Eigenschaften | Härte | Wärmeisolation / Wärmeleitfähigkeit | Bio-Chemische Eigenschaften (Physiologische Verträglichkeit, Lebensmittelverträglichkeit) |
| Piezoelektrische Eigenschaften | Formbeständigkeit | (Warm-) Formbeständigkeit | |

Die Nichtoxidkeramik beinhaltet keramische Werkstoffe auf der Basis von Verbindungen von Bor, Kohlenstoff, Stickstoff und Silizium. (Kohlenstoffprodukte aus amorphem Graphit gehören nicht dazu).

In der Regel weisen Nichtoxidkeramiken einen hohen Anteil kovalenter Bindungen auf. Diese ermöglichen hohe Einsatztemperaturen, sorgen für hohen Elastizitätsmodul und verleihen hohe Festigkeit und Härte, verbunden mit hoher Korrosionsbeständigkeit und Verschleißbeständigkeit.

Die wichtigsten Nichtoxidkeramiken sind: Siliziumcarbid, Siliziumnitrid, Aluminiumnitrid, Borcarbid und Bornitrid.

Alle Keramiken können mit einer Hartstoffschicht (z.B. Titankarbid, Tantalkarbid oder Wolframkarbid) beschichtet werden, was die Verschleißfestigkeit noch weiter erhöht.

Aus dem dargelegten ergibt sich, dass die separate Verwendung von Natur- und/oder Kunststein als auch Keramiken als Werkstoff bzw. Vollkörper mit einer Reihe von Nachteilen zu kämpfen hat. So haben auf der einen Seite z.B. Natursteine eine unübertroffene Verzugsfreiheit, eine beachtenswerte Härte und Verschleißfestigkeit, eine hohe Widerstandskraft und Wetterfestigkeit, jedoch sind sie auf der anderen Seite sehr schwer, unhandlich (insbesondere was Transport und Lagerung angeht) und häufig nicht ohne größeren Aufwand zu bearbeiten, was insbesondere dann zum Tragen kommt, wenn Natursteine beispielsweise weiterverarbeitet werden sollen (z.B. als Fundament für Mess- oder Bearbeitungsmaschinen oder dergleichen). Andererseits weisen Keramiken die Eingangs beschriebenen Vorteile auf, jedoch spielen hier insbesondere Kostenerwägungen (spezielle Keramiken können extrem teuer sein) eine wichtige Rolle, sodass häufig ein Vollkeramikkörper zu teuer ist (oder die von beispielsweise den Natur- und/oder Kunststeinen bekannten Vorteile nicht aufweist). Es hat sich jedoch als schwierig herausgestellt, die Eigenschaften beider Werkstoffgruppen miteinander zu kombinieren, da ein einfaches "verbinden", beispielsweise durch einfaches verkleben von Keramiken auf Steinen, nicht möglich ist, da diese nach kurzer Zeit vom Stein abfallen und somit spezielle Techniken zur Herstellung solch eines Verbundkörpers benötigt werden.

### Aufgabe

Aufgabe der Erfindung ist es, ein Verbundkörper bereitzustellen, der die besten Eigenschaften beider Werkstoffgruppen (Natur- und Kunststeine auf der einen Seite sowie Keramiken auf der anderen Seite) umfasst und somit als Basis für Messmaschinen, Bearbeitungsmaschinen, Messplatten und/oder mechanische Messmittel zum Einsatz gelangt.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Überraschenderweise wurde gefunden, dass Verbundkörper hergestellt werden können, die aus Kunst- und/oder Naturstein und einer Keramik bestehen.

Gegenstand der Erfindung ist somit ein als Basis für Messmaschinen, Bearbeitungsmaschinen, Messplatten und/oder mechanische Messmittel ausgebildeter Verbundkörper, der aus mindestens einem ersten Körper aus Natur- und/oder Kunststein und mindestens einem zweiten Körper aus Keramik besteht. Hierbei kann der Natur- und/oder Kunstein aus jedem erdenklichen Stein bestehen, beispielsweise aus Granit, Basalt, Kalksandstein, Marmor etc. Dem Fachmann sind solcherart Steine bekannt und sie werden alle von der vorliegenden Erfindung umfasst. Bei der Keramik handelt es sich um Oxidkeramik, deren linearer Ausdehnungskoeffizient im Temperaturbereich zwischen 20°C bis 100°C zwischen 5.8 x 10⁻⁶ 1/K bis 6.2 x 10⁻⁶ 1/K beträgt.

Erfindungsgemäß wird die Keramik mit Hilfe eines Zweikomponenten-Klebstoffes mit dem Natur- und/oder Kunststein verklebt. Bei diesem Zweikomponenten-Klebstoff handelt es sich um einen ausdehnungsarmen Klebstoff, der den gleichen linearen Ausdehnungskoeffizienten aufweist wie die Keramik. Bei der ersten Komponente des Zweikomponenten-Klebstoffes handelt es sich um ein Epoxidharz, bei der zweiten Komponente um ein Säureanhydrid und/oder Polyamin.

In einer bevorzugten Ausführungsform handelt es sich bei dem Naturstein um Granit. Dabei weist der Granit vorzugsweise besondere Eigenschaften auf. So hat der Granit vorzugsweise ein spezifisches Gewicht zwischen ca. 2,5 kg/dm³ bis 3,5 kg/dm³, vorzugsweise ca. 2,7 kg/dm³ bis 3,3 kg/dm³, insbesondere ca. 2,99 kg/dm³. Weiterhin ist bevorzugt, dass die Druckfestigkeit des Granits zwischen ca. 250 N/mm² bis 320 N/mm², vorzugsweise ca. 270 N/mm² bis 300 N/mm², insbesondere ca. 280 N/mm², liegt. Der lineare Ausdehnungskoeffizient des Granits im Temperaturbereich zwischen 20°C bis 100°C beträgt vorzugsweise zwischen ca. 4,5 x 10⁻⁴ 1/K bis 8.0 x 10⁻⁴ 1/K, vorzugsweise ca. 4.7 x 10⁻⁴ 1/K bis 7.8 x 10⁻⁴ 1/K, insbesondere ca. 5.0 x 10⁻⁴ 1/K bis 7.5 x 10⁻⁴ 1/K. Der Elastizitätsmodul (E-Modul) des Granits bewegt sich im Bereich zwischen ca. 80.000 N/mm² bis 140.000 N/mm², vorzugsweise ca. 90.000 N/mm² bis 130.000 N/mm², insbesondere ca. 100.000 N/mm² bis 120.000 N/mm². Die Biegezugfestigkeit des Granits beträgt bevorzugt zwischen ca. 11 N/mm² bis 24 N/mm², vorzugsweise zwischen ca. 12 N/mm² bis 23 N/mm², insbesondere ca. 13 N/mm² bis 22 N/mm². Die Abriebfestigkeit des Granits liegt bevorzugt zwischen ca. 6 cm³/50 cm² bis 10 cm³/50 cm², vorzugsweise zwischen ca. 7 cm³/50cm² bis 9 cm³/50 cm², insbesondere ca. 8 cm³/50 cm² sowie die Vickershärte (HV) bevorzugt zwischen ca. 830 HV bis 920 HV, vorzugsweise zwischen ca. 840 HV bis 910 HV, insbesondere zwischen ca. 850 HV bis 900 HV. Ein derart klassifizierter Granit-Naturstein wird häufig auch als basischer Tiefengestein oder Natur-Hartstein bezeichnet, der weltweit gewonnen wird. Dieser zeichnet sich bevorzugt durch eine ausgezeichnete Materialkonstanz, einer völlig gleichmäßigen Struktur, keinerlei Verwitterungserscheinungen, keine Adern sowie keine oxidierenden Erzpartikel aus. Er besitzt häufig intersertale bis ophitische Struktur, bei welcher sich durch "Verfilzung" der Gemengteile eine hohe mechanische Festigkeit einstellt.

In einer weiteren bevorzugten Ausführungsform beträgt die Druckfestigkeit des Kunststeins zwischen ca. 120 N/mm² bis 190 N/mm², vorzugsweise ca. 130 N/mm² bis 180 N/mm², insbesondere ca. 140 N/mm² bis 170 N/mm². Weiterhin weist der Kunststein einen linearen Ausdehnungskoeffizienten im Temperaturbereich zwischen 20°C bis 100°C zwischen ca. 10 x 10⁻⁶ 1/K bis 22 x 10⁻⁶ 1/K, vorzugsweise ca. 11 x 10⁻⁶ 1/K bis 21 x 10⁻⁶ 1/K, insbesondere ca. 12 x 10⁻⁶ 1/K bis 20 x 10⁻⁶ 1/K, auf. Der Kunststein hat ein Elastizitätsmodul (E-Modul) zwischen ca. 10.000 N/mm² bis 60.000 N/mm², vorzugsweise ca. 20.000 N/mm² bis 50.000 N/mm², insbesondere ca. 30.000 N/mm² bis 40.000 N/mm². Die Biegezugfestigkeit des Kunststeins liegt zwischen ca. 23 N/mm² bis 42 N/mm², vorzugsweise zwischen ca. 24 N/mm² bis 41 N/mm², insbesondere ca. 25 N/mm² bis 40 N/mm². Die spezifische Dichte des Kunststeins beträgt ca. 1,9 g/cm³ bis 2,7 g/cm³, vorzugsweise ca. 2,0 g/cm³ bis 2,6 g/cm³, insbesondere ca. 2,1 g/cm³ bis 2,4 g/cm³. Die Wärmeleitfähigkeit des Kunststeins liegt zwischen ca. 1,1 W/mK bis 2,2 W/mK, vorzugsweise zwischen 1,2 W/mK bis 2,1 W/mK, insbesondere ca. 1,3 W/mK bis 2,0 W/mK.

Die Oxidkeramik wird vorzugsweise durch isostatisches Pressen und/oder Gießen hergestellt. Oxidkeramiken, die im erfindungsgemäßen Verbundkörper eingesetzt werden können, sind bevorzugt Aluminiumoxid (Al₂O₃), Zirkoniumdioxid (ZrO₂), Titanoxid (TiO₂), Magnesiumoxid (MgO), Aluminiumtitanat (Al₂O₃+TiO₂), Bariumtitanat (BaO+TiO₂)und/oder Mischungen hiervon. Die durchschnittliche Kristallitgröße der Oxidkeramik weisen bevorzugt Größen zwischen ca. 10 µ bis 12 p, vorzugsweise ca. 11 p, auf. Es hat sich vorteilhaft herausgestellt, wenn die Oxidkeramiken geringe spezifische Gewichte aufweisen, sodass spezifische Gewichte zwischen ca. 3 g/cm³ bis 4 g/cm³, vorzugsweise ca. 3,5 g/cm³ bis 4 g/cm³, insbesondere ca. 3,8 g/cm³, bevorzugt werden. Die Druckfestigkeit der Oxidkeramik betragen bevorzugt zwischen ca. 2.800 N/mm² bis 3.200 N/mm², vorzugsweise ca. 2.900 N/mm² bis 3.100 N/mm², insbesondere ca. 3.000 N/mm². Der lineare Ausdehnungskoeffizient der Oxidkeramik im Temperaturbereich zwischen 20°C bis 100°C beträgt bevorzugt 5.9 x 10⁻⁶ 1/K bis 6.1 x 10⁻⁶ 1/K, insbesondere ca. 6.0 x 10⁻⁶ 1/K. Der Elastizitätsmodul (E-Modul) der Oxidkeramik weist bevorzugt Werte zwischen ca. 330.000 N/mm² bis 370.000 N/mm², vorzugsweise ca. 340.000 N/mm² bis 360.000 N/mm², insbesondere ca. 350.000 N/mm² auf. Die Oxidkeramik zeichnet sich weiterhin dadurch aus, dass sie im wesentlichen keine Feuchtigkeitsaufnahme und ein reaktionsloses chemisches Verhalten aufweist. Weiterhin ist bevorzugt, wenn die Gefügestruktur der Oxidkeramik im wesentlichen frei von Lunkern und Inhomogenitäten ist.

Damit die Oberfläche der Keramik zusätzlich geschützt wird, ist die Keramik in einer weiteren bevorzugten Ausführungsform mit einer Hartstoffschicht beschichtet. Solch eine Hartstoffschicht ist vorzugsweise aus Titankarbid-, Tantalkarbid-, Wolframkarbidschicht und/oder Mischungen hiervon.

Durch Verwendung des speziellen Zweikomponenten-Klebstoffes mit einem Epoxidharz als erster Komponente und einem Säureanhydrid und/oder einem Polyamin als zweiter Komponente ist es erst möglich, die Keramik derart an den Kunst- und/oder Naturstein anzubringen, dass sie nicht innerhalb kürzester Zeit von diesem abfällt. Nach Fertigstellung des erfindungsgemäßen Verbundkörpers bestehend aus Natur- und/oder Kunststein und einer Keramik wird dieser vorzugsweise verpresst und ggf., sofern erforderlich, auf Genauigkeit hin verarbeitet.

Der erfindungsgemäße Verbundkörper wird erfindungsgemäß als Basis für Messmaschinen, Bearbeitungsmaschinen, Messplatten und/oder mechanische Messmittel verwendet. Solche Körper bzw. Aufbauten oder Untergestelle können beispielsweise für Maschinen wie Laserbearbeitungsmaschinen, Spindelstöcke, Leiterplattenbohrmaschinen, Pinolen für Messmaschinen, Messplatten etc., oder für mechanische Messgeräte wie Präzisions-Messsäulen, Mess-Winkeln, Prüfrahmen, Kalibrierwürfel, Messbalken oder dergleichen sein. Weitere Einsatzgebiete sind die weiter oben beschriebenen wie z.B. Industrie, Architektur, Denkmal-Herstellung und Pflege, Maschinenbau sowie der Bildhauerei. Weitere Einsatzgebiete sind dem Fachmann bekannt und sie werden von der Erfindung umfasst.

Die Erfindung umfasst ferner eine (oder mehrere) Vorrichtung(en), die einen Verbundkörper der beschriebenen Art aufweist.

Bereichsangaben umfassen stets alle - nicht genannten - Zwischenwerte und alle denkbaren Teilintervalle.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

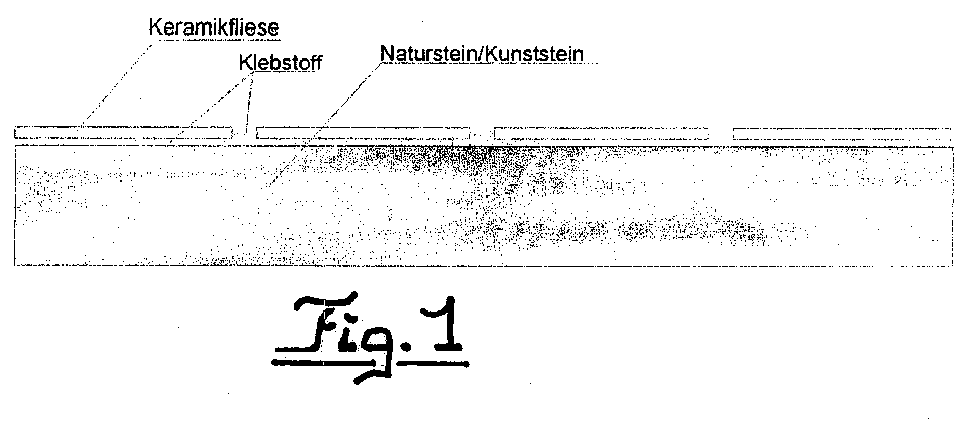

- Fig. 1: Schematische Seitenansicht einer bevorzugten Ausführungsform des erfindungsgemäßen Verbundkörpers

Fig. 1 zeigt eine schematische Darstellung einer Seitenansicht eines bevorzugten Verbundkörpers, bei dem die Keramik(fliese), der Natur- und/oder Kunststein sowie der Klebstoff erkennbar ist. Wie dargestellt, hat es sich als vorteilhaft herausgestellt, wenn der Klebstoff nicht nur zwischen Keramik und Stein (Natur- und/oder Kunststein) aufgebracht wird, sondern auch zwischen den einzelnen Keramik(fliesen) selbst, weil dadurch eine zusätzliche (Rutsch)Festigkeit bzw. erzielt werden kann.

Es sind zahlreiche Abwandlungen und Weiterbildungen der beschriebenen Ausführungsbeispiele verwirklichbar.

## Patentansprüche

1. Verbundkörper, betstehend aus mindestens einem ersten Körper aus Natur- und/oder Kunststein und mindestens einem zweiten Körper aus Keramik, **dadurch gekennzeichnet, dass**
a) die Keramik mittels eines Zweikomponenten-Klebstoffes an den Natur- und/oder Kunststein verklebt ist, wobei
b) es sich bei der ersten Komponente des Zweikomponenten-Klebstoffes um ein Epoxidharz handelt, wobei
c) es sich bei der zweiten Komponente des Zweikomponenten-Klebstoffes um ein Säureanhydrid und/oder Polyamin handelt, wobei
d) es sich bei dem Zweikomponenten-Klebstoff um einen ausdehnungsarmen Klebstoff handelt, wobei
e) es sich bei der Keramik um Oxidkeramik handelt, wobei
f) der lineare Ausdehnungskoeffizient der Oxidkeramik im Temperaturbereich zwischen 20°C bis 100°C zwischen 5.8 x 10⁻⁶ 1/K bis 6.2 x 10⁻⁶ 1/K beträgt, wobei
g) der Zweikomponenten-Klebstoff den gleichen linearen Ausdehnungskoeffizienten aufweist wie die Keramik, und wobei
h) der Verbundkörper als Basis für Messmaschinen, Bearbeitungsmaschinen, Messplatten und/oder mechanische Messmittel ausgebildet ist.

2. Verbundkörper nach Anspruch 1, **dadurch gekennzeichnet, dass** es sich bei dem Naturstein um Granit handelt.

3. Verbundkörper nach Anspruch 2, **dadurch gekennzeichnet, dass** das spezifische Gewicht des Granits zwischen 2,5 kg/dm³ bis 3,5 kg/dm³, vorzugsweise 2,7 kg/dm³ bis 3,3 kg/dm³, insbesondere 2,99 kg/dm³, beträgt.

4. Verbundkörper nach einem der Ansprüche 2 oder 3, **dadurch gekennzeichnet, dass** die Druckfestigkeit des Granits zwischen 250 N/mm² bis 320 N/mm², vorzugsweise 270 N/mm² bis 300 N/mm², insbesondere 280 N/mm², beträgt.

5. Verbundkörper nach einem der Ansprüche 2 bis 4, **dadurch gekennzeichnet, dass** der lineare Ausdehnungskoeffizient des Granits im Temperaturbereich zwischen 20°C bis 100°C zwischen 4,5 x 10⁻⁴ 1/K bis 8.0 x 10⁻⁴ 1/K, vorzugsweise 4.7 x 10⁻⁴ 1/K bis 7.8 x 10⁻⁴ 1/K, insbesondere 5.0 x 10⁻⁴ 1/K bis 7.5 x 10⁻⁴ 1/K, beträgt.

6. Verbundkörper nach einem der Ansprüche 2 bis 5, **dadurch gekennzeichnet, dass** der Elastizitätsmodul (E-Modul) des Granits zwischen 80.000 N/mm² bis 140.000 N/mm², vorzugsweise 90.000 N/mm² bis 130.000 N/mm², insbesondere 100.000 N/mm² bis 120.000 N/mm², beträgt.

7. Verbundkörper nach einem der Ansprüche 2 bis 6, **dadurch gekennzeichnet, dass** die Biegezugfestigkeit des Granits zwischen 11 N/mm² bis 24 N/mm², vorzugsweise zwischen 12. N/mm² bis 23 N/mm², insbesondere 13 N/mm² bis 22 N/mm², beträgt.

8. Verbundkörper nach einem der Ansprüche 2 bis 7, **dadurch gekenntzeichnet, dass** die Abriebfestigkeit des Granits zwischen 6 cm³/50 cm² bis 10 cm³/50 cm², vorzugsweise zwischen 7 cm³/50cm² bis 9 cm³/50 cm², insbesondere 8 cm³/50 cm², beträgt.

9. Verbundkörper nach einem der Ansprüche 2 bis 8, **dadurch gekennzeichnet, dass** die Vickershärte (HV) des Granits zwischen 830 HV bis 920 HV, vorzugsweise zwischen 840 HV bis 910 HV, insbesondere zwischen 850 HV bis 900 HV, beträgt.

10. Verbundkörper nach einem der vorhergehenden Ansprüche, **dadurch gekennzeichnet, dass** die Druckfestigkeit des Kunststeins zwischen 120 N/mm² bis 190 N/mm², vorzugsweise 130 N/mm² bis 180 N/mm², insbesondere 140 N/mm² bis 170 N/mm²,beträgt.

11. Verbundkörper nach Anspruch 10, **dadurch gekennzeichnet, dass** der lineare Ausdehnungskoeffizient des Kunststeins im Temperaturbereich zwischen 20°C bis 100°C zwischen 10 x 10⁻⁶ 1/K bis 22 x 10⁻⁶ 1/K, vorzugsweise 11 x 10⁻⁶ 1/K bis 21 x 10⁻⁶ 1/K, insbesondere 12 x 10⁻⁶ 1/K bis 20 x 10⁻⁶ 1/K, beträgt.

12. Verbundkörper nach einem der Ansprüche 10 oder 11, **dadurch gekennzeichnet, dass** der Elastizitätsmodul (E-Modul) des Kunststeins zwischen 10.000 N/mm² bis 60.000 N/mm², vorzugsweise 20.000 N/mm² bis 50.000 N/mm², insbesondere 30.000 N/mm² bis 40.000 N/mm², beträgt.

13. Verbundkörper nach einem der Ansprüche 10 bis 12, **dadurch gekennzeichnet, dass** die Biegezugfestigkeit des Kunststeins zwischen 23 N/mm² bis 42 N/mm², vorzugsweise zwischen 24 N/mm² bis 41 N/mm², insbesondere 25 N/mm² bis 40 N/mm², beträgt.

14. Verbundkörper nach einem der Ansprüche 10 bis 13, **dadurch gekennzeichnet, dass** die spezifische Dichte des Kunststeins zwischen 1,9 g/cm³ bis 2,7 g/cm³, vorzugsweise 2,0 g/cm³ bis 2,6 g/cm³, insbesondere 2,1 g/cm³ bis 2,4 g/cm³, beträgt.

15. Verbundkörper nach einem der Ansprüche 10 bis 14, **dadurch gekennzeichnet, dass** die Wärmeleitfähigkeit des Kunststeins zwischen 1,1 W/mK bis 2,2 W/mK, vorzugsweise zwischen 1,2 W/mK bis 2,1 W/mK, insbesondere 1,3 W/mK bis 2,0 W/mK, beträgt.

16. Verbundkörper nach einem der vorhergehenden Ansprüche, **dadurch gekennzeichnet, dass** es sich bei der Oxidkeramik um eine durch isostatisches Pressen und/oder Gießen hergestellte Oxidkeramik handelt.

17. Verbundkörper nach einem der vorhergehenden Ansprüche, **dadurch gekennzeichnet, dass** es sich bei der Oxidkeramik um Aluminiumoxid (Al₂O₃), Zirkoniumdioxid (ZrO₂), Titanoxid (TiO₂), Magnesiumoxid (MgO), Aluminiumtitanat (Al₂O₃+TiO₂), Bariumtitanat (BaO+TiO₂) und/oder Mischungen hiervon handelt.

18. Verbundkörper nach einem der vorhergehenden Ansprüche, **dadurch gekennzeichnet, dass** die durchschnittliche Kristallitgröße der Oxidkeramik zwischen 10 µ bis 12 p, vorzugsweise 11 p, beträgt.

19. Verbundkörper nach einem der vorhergehenden Ansprüche, **dadurch gekennzeichnet, dass** das spezifische Gewicht der Oxidkeramik zwischen 3 g/cm³ bis 4 g/cm³, vorzugsweise 3,5 g/cm³ bis 4 g/cm³, insbesondere 3,8 g/cm³, beträgt.

20. Verbundkörper nach einem der vorhergehenden Ansprüche, **dadurch gekennzeichnet, dass** die Druckfestigkeit der Oxidkeramik zwischen 2.800 N/mm² bis 3.200 N/mm², vorzugsweise 2.900 N/mm² bis 3.100 N/mm², insbesondere 3.000 N/mm², beträgt.

21. Verbundkörper nach einem der vorhergehenden Ansprüche, **dadurch gekennzeichnet, dass** der lineare Ausdehnungskoeffizient der Oxidkeramik im Temperaturbereich zwischen 20°C bis 100°C zwischen 5.9 x 10⁻⁶ 1/K bis 6.1 x 10⁻⁶ 1/K, insbesondere 6.0 x 10⁻⁶ 1/K, beträgt.

22. Verbundkörper nach einem der vorhergehenden Ansprüche, **dadurch gekennzeichnet, dass** der Elastizitätsmodul (E-Modul) der Oxidkeramik zwischen 330.000 N/mm² bis 370.000 N/mm², vorzugsweise 340.000 N/mm² bis 360.000 N/mm², insbesondere 350.000 N/mm², beträgt.

23. Verbundkörper nach einem der vorhergehenden Ansprüche, **dadurch gekennzeichnet, dass** die Gefügestruktur der Oxidkeramik frei von Lunkern ist.

24. Verbundkörper nach einem der vorhergehenden Ansprüche, **dadurch gekennzeichnet, dass** die Keramik mit einer Hartstoffschicht beschichtet ist.

25. Verbundkörper nach Anspruch 24, **dadurch gekennzeichnet, dass** es sich bei der Hartstoffschicht um eine Titankarbid-, Tantalkarbid-, Wolframkarbidschicht und/oder Mischungen hiervon handelt.

26. Verwendung eines Verbundkörpers nach einem der vorhergehenden Ansprüche als Basis für Messmaschinen, Bearbeitungsmaschinen, Messplatten und/oder mechanische Messmittel.

27. Vorrichtung, **dadurch gekennzeichnet, dass** sie einen Verbundkörper nach einem der vorhergehenden Ansprüche aufweist.

## Claims

1. Composite body, comprising at least one first body made of natural and/or artificial stone and at least one second body made of ceramic, **characterized in that** a) a two-pack adhesive is used to adhesively bond the ceramic to the natural and/or artificial stone, wherein b) the first pack of the two-pack adhesive is an epoxy resin, wherein
c) the second pack of the two-pack adhesive is an acid anhydride and/or polyamine, wherein
d) the two-pack adhesive is an adhesive having low expansion, wherein
e) the ceramic is oxide ceramic, wherein
f) the coefficient of linear expansion of the oxide ceramic in the temperature range between 20°C and 100°C is between 5.8 x 10⁻⁶ 1/K and 6.2 x 10⁻⁶ 1/K, wherein
g) the two-pack adhesive has the same coefficient of linear expansion as the ceramic, and wherein
h) the composite body is formed as the basis for measuring machines, machining machines, measurement plates and/or mechanical measuring means.

2. Composite body according to Claim 1, **characterized in that** the natural stone is granite.

3. Composite body according to Claim 2, **characterized in that** the specific weight of the granite is between 2.5 kg/dm³ and 3.5 kg/dm³, preferably between 2.7 kg/dm³ and 3.3 kg/dm³, in particular 2.99 kg/dm³.

4. Composite body according to either of Claims 2 and 3, **characterized in that** the compressive strength of the granite is between 250 N/mm² and 320 N/mm², preferably between 270 N/mm² and 300 N/mm², in particular 280 N/mm².

5. Composite body according to one of Claims 2 to 4, **characterized in that** the coefficient of linear expansion of the granite in the temperature range between 20°C and 100°C is between 4.5 x 10⁻⁴ 1/K and 8.0 x 10⁻⁴ 1/K, preferably between 4.7 x 10⁻⁴ 1/K and 7.8 x 10⁻⁴ 1/K, in particular between 5.0 x 10⁻⁴ 1/K and 7.5 x 10⁻⁴ 1/K.

6. Composite body according to one of Claims 2 to 5, **characterized in that** the modulus of elasticity (E modulus) of the granite is between 80 000 N/mm² and 140 000 N/mm², preferably between 90 000 N/mm² and 130 000 N/mm², in particular between 100 000 N/mm² and 120 000 N/mm².

7. Composite body according to one of Claims 2 to 6, **characterized in that** the tensile bending strength of the granite is between 11 N/mm² and 24 N/mm², preferably between 12 N/mm² and 23 N/mm², in particular between 13 N/mm² and 22 N/mm².

8. Composite body according to one of Claims 2 to 7, **characterized in that** the abrasion resistance of the granite is between 6 cm³/50 cm² and 10 cm³/50 cm², preferably between 7 cm³/50 cm² and 9 cm³/50 cm², in particular 8 cm³/50 cm².

9. Composite body according to one of Claims 2 to 8, **characterized in that** the Vickers hardness (HV) of the granite is between 830 HV and 920 HV, preferably between 840 HV and 910 HV, in particular between 850 HV and 900 HV.

10. Composite body according to one of the preceding claims, **characterized in that** the compressive strength of the artificial stone is between 120 N/mm² and 190 N/mm², preferably between 130 N/mm² and 180 N/mm², in particular between 140 N/mm² and 170 N/mm².

11. Composite body according to Claim 10, **characterized in that** the coefficient of linear expansion of the artificial stone in the temperature range between 20°C and 100°C is between 10 x 10⁻⁶ 1/K and 22 x 10⁻⁶ 1/K, preferably between 11 x 10⁻⁶ 1/K and 21 x 10⁻⁶ 1/K, in particular between 12 x 10⁻⁶ 1/K and 20 x 10⁻⁶ 1/K.

12. Composite body according to either of Claims 10 and 11, **characterized in that** the modulus of elasticity (E modulus) of the artificial stone is between 10 000 N/mm² and 60 000 N/mm², preferably between 20 000 N/mm² and 50 000 N/mm², in particular between 30 000 N/mm² and 40 000 N/mm².

13. Composite body according to one of Claims 10 to 12, **characterized in that** the tensile bending strength of the artificial stone is between 23 N/mm² and 42 N/mm², preferably between 24 N/mm² and 41 N/mm², in particular between 25 N/mm² and 40 N/mm².

14. Composite body according to one of Claims 10 to 13, **characterized in that** the specific density of the artificial stone is between 1.9 g/cm³ and 2.7 g/cm³, preferably between 2.0 g/cm³ and 2.6 g/cm³, in particular between 2.1 g/cm³ and 2.4 g/cm³.

15. Composite body according to one of Claims 10 to 14, **characterized in that** the thermal conductivity of the artificial stone is between 1.1 W/mK and 2.2 W/mK, preferably between 1.2 W/mK and 2.1 W/mK, in particular between 1.3 W/mK and 2.0 W/mK.

16. Composite body according to one of the preceding claims, **characterized in that** the oxide ceramic is an oxide ceramic produced by isostatic pressing and/or casting.

17. Composite body according to one of the preceding claims, **characterized in that** the oxide ceramic is aluminium oxide (Al₂O₃) , zirconium dioxide (ZrO₂), titanium oxide (TiO₂), magnesium oxide (MgO), aluminium titanate (Al₂O₃+TiO₂), barium titanate (BaO+TiO₂) and/or mixtures thereof.

18. Composite body according to one of the preceding claims, **characterized in that** the average crystallite size of the oxide ceramic is between 10 µ and 12 µ, preferably 11 µ.

19. Composite body according to one of the preceding claims, **characterized in that** the specific weight of the oxide ceramic is between 3 g/cm³ and 4 g/cm³, preferably between 3.5 g/cm³ and 4 g/cm³, in particular 3.8 g/cm³.

20. Composite body according to one of the preceding claims, **characterized in that** the compressive strength of the oxide ceramic is between 2800 N/mm² and 3200 N/mm², preferably between 2900 N/mm² and 3100 N/mm², in particular 3000 N/mm².

21. Composite body according to one of the preceding claims, **characterized in that** the coefficient of linear expansion of the oxide ceramic in the temperature range between 20°C and 100°C is between 5.9 x 10⁻⁶ 1/K and 6.1 x 10⁻⁶ 1/K, in particular 6.0 x 10⁻⁶ 1/K.

22. Composite body according to one of the preceding claims, **characterized in that** the modulus of elasticity (E modulus) of the oxide ceramic is between 330 000 N/mm² and 370 000 N/mm², preferably between 340 000 N/mm² and 360 000 N/mm², in particular 350 000 N/mm².

23. Composite body according to one of the preceding claims, **characterized in that** the microstructure of the oxide ceramic is free from voids.

24. Composite body according to one of the preceding claims, **characterized in that** the ceramic is coated with a layer of hard material.

25. Composite body according to Claim 24, **characterized in that** the layer of hard material is a layer of titanium carbide, tantalum carbide, tungsten carbide and/or mixtures thereof.

26. Use of a composite body according to one of the preceding claims as the basis for measuring machines, machining machines, measurement plates and/or mechanical measuring means.

27. Apparatus, **characterized in that** it has a composite body according to one of the preceding claims.

## Revendications

1. Corps composite, constitué d'au moins un premier corps à base de pierre naturelle et/ou de pierre artificielle et d'au moins un deuxième corps à base de céramique, **caractérisé en ce que**
a) la céramique est collée sur la pierre naturelle et/ou la pierre artificielle au moyen d'un adhésif bicomposant,
b) le premier composant de l'adhésif bicomposant consistant en une résine époxy,
c) le second composant de l'adhésif bicomposant consistant en un anhydride d'acide et/ou une polyamine,
d) l'adhésif bicomposant consistant en un adhésif à faible dilatation,
e) la céramique consistant en céramique de type oxyde,
f) le coefficient de dilatation linéaire de la céramique de type oxyde, dans la plage de température comprise entre 20 °C et 100 °C, étant compris entre 5,8 × 10⁻⁶ 1/K et 6,2 × 10⁻⁶ 1/K,
g) l'adhésif bicomposant ayant le même coefficient de dilatation linéaire que la céramique, et
h) le corps composite étant conçu comme base pour des machines de mesure, des machines d'usinage, des plateaux de mesure et/ou des moyens de mesure mécaniques.

2. Corps composite selon la revendication 1, **caractérisé en ce que** la pierre naturelle consiste en granit.

3. Corps composite selon la revendication 2, **caractérisé en ce que** le poids spécifique du granit est compris entre 2,5 kg/dm³ et 3,5 kg/dm³, de préférence entre 2,7 kg/dm³ et 3,3 kg/dm³, en particulier est de 2,99 kg/dm³.

4. Corps composite selon la revendication 2 ou 3, **caractérisé en ce que** la résistance à la compression du granit est comprise entre 250 N/mm² et 320 N/mm², de préférence entre 270 N/mm² et 300 N/mm², en particulier est de 280 N/mm².

5. Corps composite selon l'une quelconque des revendications 2 à 4, **caractérisé en ce que** le coefficient de dilatation linéaire du granit, dans la plage de température comprise entre 20 °C et 100 °C, est compris entre 4,5 × 10⁻⁴ 1/K et 8,0 × 10⁻⁴ 1/K, de préférence entre 4,7 × 10⁻⁴ 1/K et 7,8 × 10⁻⁴ 1/K, en particulier entre 5,0 × 10⁻⁴ 1/K et 7,5 × 10⁻⁴ 1/K.

6. Corps composite selon l'une quelconque des revendications 2 à 5, **caractérisé en ce que** le module d'élasticité (module E) du granit est compris entre 80 000 N/mm² et 140 000 N/mm², de préférence entre 90 000 N/mm² et 130 000 N/mm², en particulier entre 100 000 N/mm² et 120 000 N/mm².

7. Corps composite selon l'une quelconque des revendications 2 à 6, **caractérisé en ce que** la résistance à la traction sous pliage du granit est comprise entre 11 N/mm² et 24 N/mm², de préférence entre 12 N/mm² et 23 N/mm², en particulier entre 13 N/mm² et 22 N/mm².

8. Corps composite selon l'une quelconque des revendications 2 à 7, **caractérisé en ce que** la résistance à l'abrasion du granit est comprise entre 6 cm³/50 cm² et 10 cm³/50 cm², de préférence entre 7 cm³/50 cm² et 9 cm³/50 cm², en particulier est de 8 cm³/50 cm².

9. Corps composite selon l'une quelconque des revendications 2 à 8, **caractérisé en ce que** la dureté Vickers (HV) du granit est comprise entre 830 HV et 920 HV, de préférence entre 840 HV et 910 HV, en particulier entre 850 HV et 900 HV.

10. Corps composite selon l'une quelconque des revendications précédentes, **caractérisé en ce que** la résistance à la compression de la pierre artificielle est comprise entre 120 N/mm² et 190 N/mm², de préférence entre 130 N/mm² et 180 N/mm², en particulier entre 140 N/mm² et 170 N/mm².

11. Corps composite selon la revendication 10, **caractérisé en ce que** le coefficient de dilatation linéaire de la pierre artificielle, dans la plage de température comprise entre 20 °C et 100 °C, est compris entre 10 × 10⁻⁶ 1/K et 22 × 10⁻⁶ 1/K, de préférence entre 11 × 10⁻⁶ 1/K et 21 × 10⁻⁶ 1/K, en particulier entre 12 × 10⁻⁶ 1/K et 20 × 10⁻⁶ 1/K.

12. Corps composite selon la revendication 10 ou 11, **caractérisé en ce que** le module d'élasticité (module E) de la pierre artificielle est compris entre 10 000 N/mm² et 60 000 N/mm², de préférence entre 20 000 N/mm² et 50 000 N/mm², en particulier entre 30 000 N/mm² et 40 000 N/mm².

13. Corps composite selon l'une quelconque des revendications 10 à 12, **caractérisé en ce que** la résistance à la traction sous pliage de la pierre artificielle est comprise entre 23 N/mm² et 42 N/mm², de préférence entre 24 N/mm² et 41 N/mm², en particulier entre 25 N/mm² et 40 N/mm².

14. Corps composite selon l'une quelconque des revendications 10 à 13, **caractérisé en ce que** la densité spécifique de la pierre artificielle est comprise entre 1,9 g/cm³ et 2,7 g/cm³, de préférence entre 2,0 g/cm³ et 2,6 g/cm³, en particulier entre 2,1 g/cm³ et 2,4 g/cm³.

15. Corps composite selon l'une quelconque des revendications 10 à 14, **caractérisé en ce que** la conductivité thermique de la pierre artificielle est comprise entre 1,1 W/mK et 2,2 W/mK, de préférence entre 1,2 W/mK et 2,1 W/mK, en particulier entre 1,3 W/mK et 2,0 W/mK.

16. Corps composite selon l'une quelconque des revendications précédentes, **caractérisé en ce que** la céramique de type oxyde consiste en une céramique de type oxyde produite par compression isotactique et/ou coulée.

17. Corps composite selon l'une quelconque des revendications précédentes, **caractérisé en ce que** la céramique de type oxyde consiste en oxyde d'aluminium (Al₂O₃), dioxyde de zirconium (ZrO₂), oxyde de titane (TiO₂), oxyde de magnésium (MgO), titanate d'aluminium (Al₂O₃+TiO₂), titanate de baryum (BaO+TiO₂) et/ou des mélanges de ceux-ci.

18. Corps composite selon l'une quelconque des revendications précédentes, **caractérisé en ce que** la taille moyenne de cristallite de la céramique de type oxyde est comprise entre 10 µm et 12 µm, de préférence est de 11 µm.

19. Corps composite selon l'une quelconque des revendications précédentes, **caractérisé en ce que** le poids spécifique de la céramique de type oxyde est compris entre 3 g/cm³ et 4 g/cm³, de préférence entre 3,5 g/cm³ et 4 g/cm³, en particulier est de 3,8 g/cm³.

20. Corps composite selon l'une quelconque des revendications précédentes, **caractérisé en ce que** la résistance à la compression de la céramique de type oxyde est comprise entre 2 800 N/mm² et 3 200 N/mm², de préférence entre 2 900 N/mm² et 3 100 N/mm², en particulier est de 3 000 N/mm².

21. Corps composite selon l'une quelconque des revendications précédentes, **caractérisé en ce que** le coefficient de dilatation linéaire de la céramique de type oxyde, dans la plage de température comprise entre 20 °C et 100 °C, est compris entre 5,9 × 10⁻⁶ 1/K et 6,1 × 10⁻⁶ 1/K, en particulier est de 6,0 × 10⁻⁶ 1/K.

22. Corps composite selon l'une quelconque des revendications précédentes, **caractérisé en ce que** le module d'élasticité (module E) de la céramique de type oxyde est compris entre 330 000 N/mm² et 370 000 N/mm², de préférence entre 340 000 N/mm² et 360 000 N/mm², en particulier est de 350 000 N/mm².

23. Corps composite selon l'une quelconque des revendications précédentes, **caractérisé en ce que** la structure de la céramique de type oxyde est dépourvue de bulles.

24. Corps composite selon l'une quelconque des revendications précédentes, **caractérisé en ce que** la céramique est revêtue avec une couche de matière dure.

25. Corps composite selon la revendication 24, **caractérisé en ce que** la couche de matière dure consiste en une couche de carbure de titane, carbure de tantale, carbure de tungstène et/ou de mélanges de ceux-ci.

26. Utilisation d'un corps composite selon l'une quelconque des revendications précédentes, comme base pour des machines de mesure, des machines d'usinage, des plateaux de mesure et/ou des moyens de mesure mécaniques.

27. Dispositif, **caractérisé en ce qu'**il comporte un corps composite selon l'une quelconque des revendications précédentes.
